# DEMANDE DE BREVET EUROPEEN

(11) **EP 3 050 776 A1**
(43) Date de publication de la demande: **03.08.2016**
(21) Numéro de dépôt: 16153169.4
(22) Date de dépôt: 28.01.2016
(51) Int. Cl.: B62D 3/12, F16H 55/28

(54) **POUSSOIR DE DIRECTION ASSISTÉE COMPRENANT UN RESSORT DE RAPPEL POURVU D'UN ENROBAGE ÉLASTOMÈRE AMORTISSEUR**

(30) Priorité: 29.01.2015 FR 1550677
(71) Demandeur: Jtekt Europe, 69540 Irigny (FR)
(72) Inventeur: CASSAR, Stéphane, 69300 CALUIRE (FR); REY, Laurent, 69100 VILLEURBANNE (FR)
(74) Mandataire: Chevalier, Renaud Philippe

(57) **Abrégé**

L'invention concerne un système de poussoir (1) pour mécanisme de direction comprenant une crémaillère (3) de direction sur laquelle engrène au moins un pignon d'entraînement, ledit système de poussoir (1) comprenant un poussoir (13) qui est monté mobile au sein d'un carter de poussoir et qui est placé sous la contrainte d'un ressort de rappel (15), de manière à ce que ledit poussoir (13) vienne exercer sur la crémaillère (3), sous l'action dudit ressort de rappel (15), un effort de poussée (F13) qui presse ladite crémaillère (3) contre le pignon d'entraînement, ledit système de poussoir (1) étant caractérisé en ce que le ressort de rappel (15) est au moins en partie noyé dans un bloc amortisseur (20) en matériau élastomère.

## Description

La présente invention concerne les systèmes de poussoirs pour direction, destinés à équiper des mécanismes de direction, notamment des mécanismes de direction assistée, qui comprennent une crémaillère de direction qui est montée mobile, généralement en translation selon son axe longitudinal, dans un carter de direction et qui est manoeuvrée en déplacement par au moins un pignon d'entraînement, lequel est généralement relié à la colonne de direction qui porte le volant de conduite.

De tels systèmes de poussoirs sont des dispositifs conçus pour exercer sur la crémaillère de direction, à l'encontre du ou des pignons d'entraînement qui engrènent sur ladite crémaillère de direction, un effort de rappel élastique qui permet de maintenir ladite crémaillère de direction plaquée contre ledit (lesdits) pignon(s), tout en accommodant les éventuels déplacements transverses de ladite crémaillère, qui tendent à éloigner ou à rapprocher ladite crémaillère de l'axe du pignon, et qui sont dus notamment aux tolérances d'usinage ou d'assemblage, aux effets de l'usure de la crémaillère et/ou du pignon d'entraînement, ou bien encore aux efforts transmis à la crémaillère par le train roulant.

De tels systèmes de poussoirs permettent ainsi de limiter les chocs et les bruits d'engrènement.

On connaît en particulier des systèmes de poussoirs pourvus d'un poussoir coulissant, qui est monté mobile en translation dans une chemise orientée transversalement à la crémaillère, et qui est contraint à l'encontre de la crémaillère et du pignon par un ressort de rappel hélicoïdal.

Si de tels systèmes connus procurent généralement satisfaction, ils peuvent toutefois souffrir de certaines limitations.

En effet, le poussoir est soumis à différents efforts, selon la situation de vie dans laquelle se trouve le véhicule.

Ainsi, par exemple, si le conducteur alterne entre un braquage à gauche et un braquage à droite (ou inversement), le poussoir subira des efforts alternés de grande amplitude mais de fréquence basse.

En revanche, lorsque le véhicule roule par exemple en ligne droite sur une mauvaise route, rugueuse ou bosselée, le train roulant soumet la crémaillère à des oscillations qui se répercutent sur le poussoir, qui subira de la sorte des efforts alternés de faible amplitude mais de fréquence élevée.

Or, il est nécessaire de garantir un bon contact entre le pignon et la crémaillère en toutes circonstances.

A cet effet, il est connu de pré-contraindre fortement le ressort de rappel lors de son montage (lorsque l'on procède au tarage dudit ressort), de sorte à limiter le risque que la crémaillère ne se décolle du pignon, même sous forte contrainte.

Toutefois, une telle solution tend à accélérer l'usure des pièces mobiles qui sont en contact les unes avec les autres, et donc à réduire la durée de vie du système de poussoir, et plus globalement la durée de vie de la direction assistée.

Une autre possibilité connue consiste à prévoir, en sus du ressort de rappel, un élément amortisseur en élastomère, qui est interposé entre le poussoir et la culasse de la chemise dans laquelle se déplace ledit poussoir, de manière à obtenir un effet de suspension plus progressif, avec un meilleur amortissement.

Toutefois, cet effet amortisseur n'intervient qu'en phase de compression du ressort de rappel, lorsque le poussoir recule en s'éloignant du pignon, et n'empêche pas un retour rapide, voire brutal, du poussoir lorsque le ressort se détend de nouveau pour rapprocher ledit poussoir, et la crémaillère que ce dernier supporte, du pignon.

En outre, l'adjonction d'un élément amortisseur tend à augmenter la complexité de l'assemblage, le coût de fabrication et l'encombrement du système de poussoir.

Les objets assignés à l'invention visent par conséquent à remédier aux inconvénients susmentionnés et à proposer un nouveau dispositif de poussoir pour direction assistée qui assure un bon engrènement de la crémaillère sur le pignon d'entraînement en toutes circonstances, qui élimine efficacement les jeux, les chocs et les bruits d'engrènement, tout en étant particulièrement compact et en possédant une bonne longévité.

Les objets assignés à l'invention sont atteints au moyen d'un système de poussoir pour mécanisme de direction comprenant une crémaillère de direction sur laquelle engrène au moins un pignon d'entraînement, ledit système de poussoir comprenant un poussoir qui est monté mobile au sein d'un carter de poussoir et qui est placé sous la contrainte d'un ressort de rappel, de manière à ce que ledit poussoir vienne exercer sur la crémaillère, sous l'action dudit ressort de rappel, un effort de poussée qui presse ladite crémaillère contre le pignon d'entraînement, ledit système de poussoir étant caractérisé en ce que le ressort de rappel est au moins en partie noyé dans un bloc amortisseur en matériau élastomère.

Avantageusement, le fait de noyer le ressort de rappel dans un matériau élastomère amortissant, pour créer un organe de rappel (unique) qui intègre à la fois un ressort de rappel et un bloc amortisseur en élastomère, permet de rassembler et combiner la fonction de rappel (exercée principalement par le ressort) et la fonction d'amortissement (exercée principalement par le bloc amortisseur) au sein d'une seule et même pièce, dont les dimensions sont de surcroît proches des dimensions du ressort de rappel « nu » (c'est-à-dire s'il était dépourvu de bloc amortisseur en élastomère), ce qui rend ledit organe de rappel particulièrement compact.

En remplissant (comblant) les espaces compris entre des portions du ressort de rappel qui sont amenées à se déplacer les unes par rapport aux autres sous l'effet de la déformation élastique dudit ressort de rappel, le matériau élastomère constitutif du bloc amortisseur permet d'obtenir d'une part un (premier) effet d'amortissement et une raideur variable (progressivement croissante) de l'organe de rappel lors de la compression du ressort de rappel (compression qui correspond ici à un mouvement de recul ou de « descente » du poussoir, et par conséquent à un mouvement de recul de la crémaillère, par rapport à l'axe de rotation du pignon d'entraînement), et d'autre part un (second) effet amortisseur en détente, du fait que le matériau élastomère tend à retenir les portions mobiles du ressort de rappel les unes aux autres, en freinant ainsi le redéploiement desdites portions mobiles du ressort, et par conséquent en freinant le mouvement d'avance (ou de « remontée ») du poussoir, et donc de la crémaillère, en direction de l'axe de rotation du pignon d'entraînement.

Avantageusement, grâce à l'accroissement de l'amortissement et de la raideur de l'organe de rappel au fur et à mesure de la compression, on obtient un rappel et un plaquage efficaces du poussoir contre la crémaillère, et donc de la crémaillère contre le pignon d'entraînement, quelle que soit la situation de vie du véhicule, et notamment quel que soit le degré d'enfoncement (de recul) du poussoir, et ce sans qu'il soit nécessaire de pré-contraindre fortement le ressort de rappel lors du montage.

L'invention permet donc un tarage léger du ressort, ce qui contribue à réduire le frottement et donc l'usure des pièces constitutives du poussoir et de la direction, et améliore ainsi la longévité de l'ensemble.

En outre, le bloc amortisseur, grâce au second effet d'amortissement qu'il procure, cette fois-ci en détente, adoucit les mouvements d'avance du poussoir, et de la crémaillère, et réduit ainsi les chocs et les bruits de claquement du train roulant, et plus particulièrement de la direction, lorsque le véhicule progresse sur un terrain irrégulier.

Ainsi l'invention permet globalement d'obtenir en permanence un rappel de la crémaillère contre le pignon qui est à la fois efficace et bien amorti, en bénéficiant d'un amortissement bidirectionnel qui est actif et efficace aussi bien en compression qu'en détente, et ce au moyen d'une structure qui est peu encombrante, simple, peu onéreuse à fabriquer, et particulièrement robuste.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue schématique de face, avec coupe partielle dans le plan contenant l'axe longitudinal de coulissement (YY') de la crémaillère et la direction de poussée (ZZ') du système de poussoir, un module de direction assistée équipé d'un système de poussoir selon l'invention.
Les figures 2 et 3 illustrent, selon des vues respectivement en coupe de côté et en projection de dessus, un exemple de poussoir selon l'invention, mis en oeuvre au sein du module de direction de la figure 1.
Les figures 4 et 5 illustrent, selon des vues de côté et de dessus respectivement, un exemple d'organe de rappel selon l'invention, comprenant un ressort de rappel noyé dans un bloc amortisseur, pouvant être mis en oeuvre au sein du module de direction de la figure 1.
La figure 6 illustre, selon une vue schématique en coupe dans le plan médian du poussoir, normal à l'axe de coulissement (YY') de la crémaillère, la mise en place de l'organe de rappel de la figure 4 au sein du poussoir de la figure 2.
Les figures 7, 8 et 9 illustrent, selon des vues de côté, différentes variantes d'organes de rappel selon l'invention au sein desquelles le bloc amortisseur est respectivement affleurant, rentrant, ou saillant longitudinalement par rapport au ressort de rappel qu'il enrobe.
Les figures 10 et 11 illustrent, respectivement selon une vue en coupe transverse, perpendiculaire à la direction de poussée (ZZ') de l'organe de rappel, et selon une vue en coupe longitudinale contenant ladite direction de poussée, une variante de réalisation d'organe de rappel selon l'invention avec un bloc amortisseur tubulaire creux.
Les figures 12 et 13 illustrent, respectivement selon une vue en coupe transverse, perpendiculaire à la direction de poussée (ZZ') de l'organe de rappel, et selon une vue en coupe longitudinale contenant ladite direction de poussée, une variante de réalisation d'organe de rappel selon l'invention avec un bloc amortisseur cylindrique plein.

L'invention concerne un système de poussoir 1 pour mécanisme de direction 2.

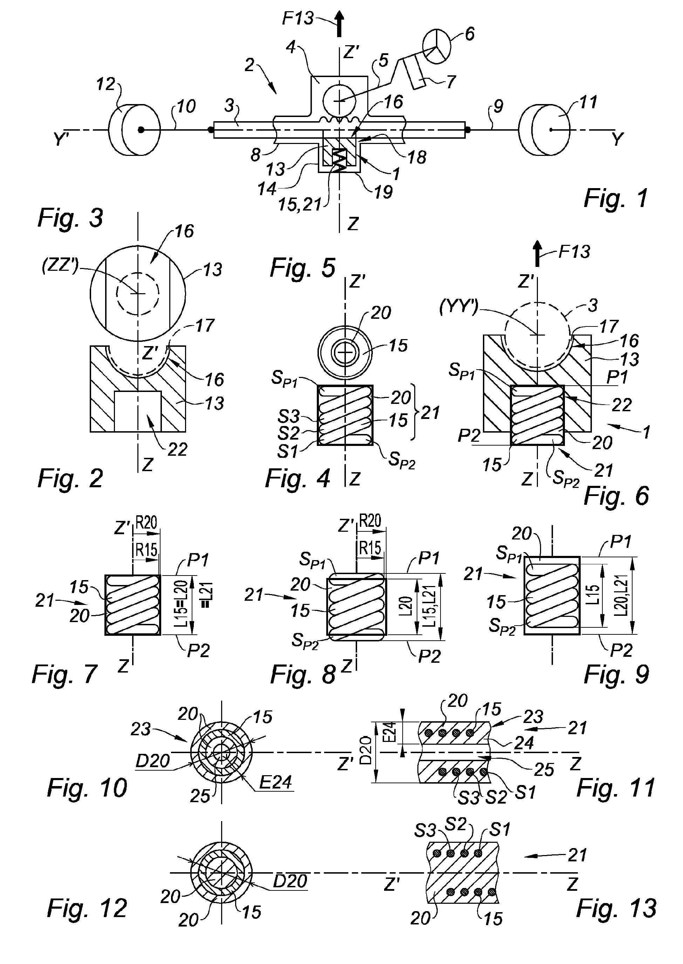

Tel que cela est illustré sur la figure 1, ledit mécanisme de direction 2 comprend une crémaillère de direction 3 sur laquelle engrène au moins un pignon d'entraînement 4.

La rotation du pignon d'entraînement 4 considéré peut être assurée manuellement, typiquement par une colonne de direction 5 portant un volant de conduite 6, et/ou par un moteur d'assistance 7, de préférence électrique ou hydraulique.

Le moteur d'assistance 7 pourra notamment venir en prise soit sur la colonne de direction 5 portant le pignon d'entraînement 4, pour former un mécanisme dit « à simple pignon », de préférence par l'intermédiaire d'un réducteur par exemple à roue tangente et vis sans fin, soit directement sur la crémaillère 3, par exemple au moyen d'un pignon d'entraînement 4 distinct et distant du pignon d'entraînement "manuel" porté par la colonne de direction 5, de sorte à former un mécanisme de direction dit « à double pignon », ou bien encore au moyen d'un système d'accouplement de type vis à billes.

La rotation du pignon d'entraînement 4 provoque le déplacement de la crémaillère 3 en translation, selon un axe de coulissement (YY'), au sein d'un carter de direction 8 fixé au véhicule.

Les déplacements de la crémaillère 3 sont ensuite transmis, par des biellettes de direction (gauche 9 et droite 10), aux organes directeurs du véhicule, en l'occurrence aux roues directrices (et de préférences motrices) gauche 11 et droite 12, pour modifier l'angle de braquage (l'orientation en lacet) desdites roues 11, 12.

De préférence, l'axe de coulissement (YY') de la crémaillère 3 coïncide avec la direction d'extension longitudinale de la crémaillère 3, et, par ailleurs, avec la direction latérale transverse (gauche-droite) du véhicule.

Selon l'invention, le système de poussoir 1 comprend un poussoir 13 qui est monté mobile au sein d'un carter de poussoir 14 et qui est placé sous la contrainte d'un ressort de rappel 15, de manière à ce que ledit poussoir 14 vienne exercer sur la crémaillère 3, sous l'action dudit ressort de rappel 15, un effort de poussée F13 qui presse ladite crémaillère 3 contre le pignon d'entraînement 4.

En d'autres termes, le ressort de rappel 15 est agencé de manière à contraindre élastiquement le poussoir 13 à l'encontre de la crémaillère 3 et du pignon d'entraînement 4 de telle sorte que ledit poussoir 13 vienne presser ladite crémaillère 3 contre ledit pignon 4.

Ici, l'effort de poussée F13 s'exerce selon une direction de poussée (ZZ') qui est transverse, et plus préférentiellement sensiblement perpendiculaire, à l'axe de coulissement (YY').

Plus particulièrement, tel que cela est illustré sur la figure 1, le poussoir 13 vient, sous la contrainte due à la déformation élastique (ici en compression) du ressort de rappel 15, en appui contre la crémaillère 3, ici contre le dos de la crémaillère 3, diamétralement à l'opposé, par rapport à l'axe de coulissement (YY'), de la denture de ladite crémaillère qui engrène avec la denture du pignon d'entraînement 4.

A cet effet, une extrémité (ici l'extrémité supérieure sur les figures 1, 2 et 6) du poussoir 13 est de préférence aménagée de sorte à former un berceau 16 concave, de préférence hémi-cylindrique de base circulaire, qui est conçu pour épouser sensiblement la forme du dos de ladite crémaillère 3.

Tel que cela est illustré sur les figures 2 et 6, le berceau 16 peut avantageusement être garni d'un patin 17, par exemple en matériau polymère, du type polyamide (PA) renforcé, ou en matériau métallique de type acier revêtu de polymère, et notamment de PTFE, destiné à favoriser le glissement de la crémaillère sur le poussoir 13, transversalement à la direction de poussée (ZZ') de ce dernier.

Ledit patin 17 offrira avantageusement une surface de glissement de type palier lisse pour la crémaillère 3, dans un matériau distinct de celui constitutif de ladite crémaillère.

La surface de glissement pourra par ailleurs comporter des dépressions de type rainures formant des réserves pour un lubrifiant.

Le carter de poussoir 14 sera avantageusement solidaire du carter de direction 8, ledit carter de poussoir 14 pouvant être soit rapporté et fixé sur le carter de direction 8, soit formé d'un seul tenant avec ce dernier.

De préférence, tel que cela est illustré sur la figure 1, le carter de poussoir 14 forme une chemise qui s'étend depuis une ouverture d'accès 18, destinée à déboucher sur la crémaillère 3 pour permettre au poussoir 13 de venir au contact de la crémaillère 3, jusqu'à une culasse 19 qui obture ladite chemise à l'opposé de ladite ouverture d'accès 18.

La culasse 19 pourra avantageusement être rapportée et fixée par vissage sur le carter de poussoir 14, le degré de vissage permettant, le cas échéant, de tarer le ressort de rappel 15 (en pré-contraignant plus ou moins ledit ressort de rappel 15 en compression à l'encontre du poussoir 13 et de la crémaillère 3).

De préférence, le poussoir 13 est monté et guidé en translation dans la chemise.

Avantageusement, le poussoir 13 formera ainsi de préférence une sorte de piston coulissant, apte à prendre contact avec le dos de la crémaillère 3 à travers l'ouverture d'accès 18, et capable d'alterner, dans les limites d'une course axiale prédéfinie par construction, et ici selon un axe de poussée correspondant à la direction de poussée (ZZ'), d'une part des mouvements d'avance axiale vers la crémaillère 3 et le pignon d'entraînement 4 et d'autre part des mouvements de recul axial dans le sens opposé, afin d'accommoder élastiquement les variations de la configuration d'engrènement liées notamment aux conditions de sollicitation de la crémaillère 3 ou aux tolérances de fabrication et d'assemblage du pignon 4 et de ladite crémaillère 3.

L'équipage mobile comprenant le poussoir 13, le patin 17 et la crémaillère 3 soutenue par ce dernier se trouvera donc suspendu élastiquement, selon l'axe de poussée (ZZ'), par le ressort de rappel 15.

Par commodité de réalisation, le poussoir 13, et plus particulièrement son enveloppe radialement externe, ainsi que la paroi radialement interne de la chemise qui assure le guidage dudit poussoir 13, présenteront de préférence sensiblement une géométrie cylindrique de révolution, centrée sur l'axe de poussée (ZZ').

Selon l'invention, le ressort de rappel 15 est au moins en partie noyé dans un bloc amortisseur 20 en matériau élastomère.

Le bloc amortisseur 20 est avantageusement réalisé dans un matériau, élastomère, qui est distinct du matériau constitutif du ressort de rappel 15 et plus souple que ce dernier, et notamment dans un matériau qui présente un module d'Young inférieur à celui du matériau constitutif du ressort de rappel 15, de sorte à procurer un comportement plus amorti que le ressort de rappel 15 seul, avec une meilleure dissipation des déformations, et notamment avec une meilleure dissipation des déformations rapides dues aux chocs et aux vibrations.

A titre indicatif et non limitatif, le bloc amortisseur 20 pourra être réalisé dans un matériau élastomère thermodurcissable tel que, par exemple, un polyuréthane réticulé (PUR), un polyisobutylène (PIB) ou un élastomère isobutylène-isoprène (IIR), un copolymère butadiène-acrylonitrile (NBR), un terpolymère éthylène-propylène-diène (EPDM), un silicone réticulé, et présentera de préférence une dureté Shore A comprise entre 50 et 80 Shore A.

Avantageusement, le ressort de rappel 15 se trouve au moins en partie, de préférence en majorité, voire en totalité, immergé dans la masse (unitaire) du bloc amortisseur 20 qui recouvre et cache ledit ressort 15, en mouillant les surfaces dudit ressort 15.

Le ressort de rappel 15 formera ainsi une sorte d'âme ou d'armature (au moins partiellement) enfouie dans le bloc amortisseur 20 élastomère, bloc 20 qui forme de préférence une enveloppe dont la forme et les contours internes épousent les surfaces du ressort de rappel 15, mais dont les formes et contours externes sont de préférence différents de (et notamment plus simples que) les formes et contours externes du ressort de rappel 15 (considéré nu, avant enrobage par ledit bloc 20 des surfaces du ressort concernées, initialement apparentes).

Le bloc amortisseur 20 pourra avantageusement être formé par moulage, de préférence par moulage par injection, autour du ressort 15, en remplissant avec le matériau élastomère un moule idoine, dont l'empreinte correspond aux formes extérieures du bloc 20, et dans lequel on aura préalablement placé le ressort 15 formant noyau.

La combinaison du ressort de rappel 15 et du bloc amortisseur 20, désignés ci-après dans leur ensemble (solidaire) par l'expression « organe de rappel 21 », permet donc d'obtenir à la fois un effort de poussée F13 assurant un soutien ferme, principalement exercé par le ressort de rappel 15 (notamment en début de course, lorsque ledit ressort 15 est peu comprimé) d'une part, et un bon effet d'amortissement, tant en compression (recul du poussoir qui s'éloigne du pignon 4) qu'en détente (avance du poussoir qui retourne vers le pignon 4), principalement grâce aux propriétés du bloc 20 en élastomère, d'autre part.

En outre, la présence du bloc amortisseur 20 permet avantageusement d'obtenir une raideur variable de l'organe de rappel 21, en l'espèce une raideur croissante qui augmente au fur et à mesure de l'enfoncement (recul) du poussoir 13, et donc au fur et à mesure de la compression du ressort 15 et plus globalement au fur et à mesure de la compression dudit organe de rappel 21, grâce à la contribution progressive du bloc amortisseur 20 qui exerce, en complément de l'action du ressort de rappel 15, une résistance à la compression de plus en plus élevée au fur et à mesure que le matériau élastomère s'écrase sous la compression. L'efficacité du maintien de la crémaillère 3 s'en trouve accrue.

De préférence, le ressort de rappel 15 est réalisé dans un matériau métallique, tel que l'acier.

Un tel matériau sera en effet facile et peu onéreux à approvisionner et à mettre en forme, et présentera en outre une bonne robustesse ainsi qu'une rigidité élevée (notamment au regard du bloc amortisseur élastomère 20), qui conférera à l'organe de rappel 21 l'essentiel de sa raideur (au moins au début de la course en recul du poussoir 13).

On pourra plus particulièrement utiliser un acier dit « acier à ressort », typiquement un acier au silicium, un acier au chrome, un acier au chrome-silicium, ou un acier au vanadium.

De préférence, notamment par volonté de compacité et de simplicité de fabrication, le ressort de rappel 15, et plus globalement l'organe de rappel 21 que forment ledit ressort de rappel 15 et le bloc amortisseur 20 qui lui est associé, est interposé entre la culasse 19 et la base du poussoir 13 opposée à la crémaillère 3, tel que cela est illustré sur la figure 1.

De façon particulièrement préférentielle, l'organe de rappel 21 viendra au contact direct de la culasse 19 (par sa première extrémité) et au contact direct du poussoir 13 (par sa seconde extrémité, opposée à la première), ce qui réduit la complexité et l'encombrement du système de poussoir 1, et en accroît la fiabilité.

De préférence, tel que cela est illustré sur la figure 6, le ressort de rappel 15 et le bloc amortisseur 20 qui lui est associé forment un organe de rappel 21 qui est emmanché dans un logement d'accueil 22 creusé dans le poussoir 13.

Le logement d'accueil 22 est de préférence formé par un alésage ou bien un trou borgne, qui est préférentiellement creusé axialement dans le poussoir 13, de façon concentrique audit poussoir 13, à partir de la base du poussoir opposée à la crémaillère 3, et selon l'axe de poussée (ZZ') qui coïncide avec l'axe générateur du poussoir.

Ledit logement d'accueil 22 est de préférence dimensionné pour accueillir l'organe de rappel 21, et plus particulièrement le ressort de rappel 15, sur au moins une partie, et de préférence sur la majorité (c'est-à-dire sur plus de la moitié) de la longueur axiale L21 dudit organe de rappel 21, respectivement de la longueur axiale L15 dudit ressort de rappel 15.

Le logement d'accueil 22 présente de préférence une forme sensiblement conjuguée à la forme de l'organe de rappel 21, toutes deux étant de préférence cylindrique de base circulaire et préférentiellement d'axe générateur rectiligne, ici confondu avec l'axe de poussée (ZZ').

Avantageusement, l'emmanchement en force de l'organe de rappel 21 à l'intérieur du poussoir 13, dans le logement d'accueil 22 permet d'une part de réduire l'encombrement hors-tout du système de poussoir 1, et plus particulièrement la longueur axiale de la chemise, et d'autre part de maintenir l'organe de rappel 21 solidaire du poussoir 13 lors du montage dudit poussoir 13 au sein du carter de poussoir 14, ce qui réduit considérablement le risque de faire chuter et/ou de perdre ledit organe de rappel 21 pendant les manipulations du poussoir 13.

L'emmanchement sera avantageusement réalisé par compression radiale élastique centripète (constriction élastique), c'est-à-dire par compression élastique dirigée radialement vers l'axe de poussée (ZZ'), perpendiculairement audit axe de poussée, de la paroi latérale souple de l'organe de rappel 21, et plus particulièrement de la zone latérale périphérique du bloc amortisseur 20 en élastomère, par déformation élastique à l'encontre de la paroi latérale (rigide) de la chemise du carter de poussoir 14.

Le diamètre du logement d'accueil 22 sera donc de préférence légèrement inférieur au diamètre D20 du bloc amortisseur 20 considéré au repos, libre de contrainte, tel qu'il se présente avant introduction dans le logement 22.

De préférence, selon une caractéristique préférentielle, qui autorisera notamment la déformation périphérique de l'organe de rappel 21, et permettra ainsi la création d'une force d'adhésion par friction pour retenir ledit organe 21 au sein du logement d'accueil 22, le bloc amortisseur en élastomère 20 débordera latéralement du ressort de rappel 15, en saillie radiale de ce dernier, par rapport à l'axe générateur dudit ressort de rappel 15 et plus globalement par rapport à l'axe générateur de l'organe de rappel 21.

En d'autres termes, le rayon hors-tout R20 du bloc amortisseur 20 en élastomère est de préférence strictement supérieur au rayon hors-tout R15 du ressort de rappel 15, tel que cela est illustré sur les figures 7 et 8.

On notera du reste que les axes générateurs du ressort de rappel 15 et de l'organe de rappel 21, ainsi que l'axe générateur du poussoir 13 et celui de la chemise du carter de poussoir 14, coïncident de préférence entre eux ainsi qu'avec l'axe de poussée (ZZ'), et sont donc assimilés audit axe de poussée (ZZ') par commodité de description.

Selon un agencement préférentiel, tel que cela est illustré sur les figures 4 à 13, le ressort de rappel 15 est formé par un ressort hélicoïdal dont les spires S1, S2, S3... s'étagent selon un axe générateur, que l'on notera (ZZ') par commodité car il correspond ici à l'axe de poussée (ZZ').

De préférence, le bloc amortisseur 20 couvre alors au moins deux, et de préférence au moins trois, spires S1, S2, S3 consécutives (c'est-à-dire des spires qui se succèdent axialement selon une répartition qui est égale à la valeur du pas d'enroulement du ressort hélicoïdal) de sorte à relier axialement lesdites spires consécutives S1, S2, S3 les unes aux autres.

Ainsi, le matériau élastomère du bloc amortisseur 20 occupe et comble au moins l'un des espaces interstitiels, et de préférence plusieurs des espaces interstitiels, qui marquent la limite axiale entre deux spires consécutive voisines S1, S2, respectivement S2, S3, voire qui séparent axialement deux spires consécutives voisines S1, S2, respectivement S2, S3 (si lesdites spires sont axialement disjointes), selon le pas d'enroulement du ressort de rappel 15.

Ainsi, le bloc amortisseur 20 jette axialement une sorte de pont élastique en élastomère entre spires voisines, pont qui peut avantageusement entourer et noyer les spires concernées sur la majorité, voire la totalité du pourtour de leur section transverse, comme cela est notamment visible sur les figures 11 et 13.

De préférence, chaque pont élastique, et donc plus globalement le bloc amortisseur 20, qui relie deux à deux les spires S1, S2, S3 concernées, s'étend en continu, en azimut autour de l'axe générateur (ZZ') du ressort 15, sur un secteur angulaire qui couvre la majorité voire préférentiellement la totalité d'un tour d'enroulement desdites spires.

Ainsi, de préférence, le (chaque) pont en élastomère s'étend sur 360 degrés autour de l'axe générateur (ZZ') du ressort 15 autour duquel s'enroulent lesdites spires S1, S2.

Un tel agencement annulaire du ou des ponts en élastomère améliore la robustesse du bloc amortisseur 20, sa cohésion avec le ressort de rappel 15, et assure, par une bonne répartition des sollicitations, un effet amortisseur homogène et équilibré.

Avantageusement, en créant un lien en matériau élastomère entre spires S1, S2, S3 voisines, l'invention permet au bloc amortisseur 20 d'être sollicité, et donc d'apporter une contribution active au système de poussoir 1, aussi bien lors du recul du poussoir 13 et de la compression (axiale) du ressort de rappel 15, et plus globalement lors de la compression de l'organe de rappel 21, que lors de l'avance du poussoir 13, lors de la détente du ressort de rappel 15, et plus globalement lors de la détente de l'organe de rappel 21.

En particulier, le bloc amortisseur 20 peut ainsi exercer une action axiale (de composante axiale) à l'encontre des spires S1, S2, S3, et plus globalement à l'encontre des déformations élastiques du ressort de rappel 15.

En effet, lors d'une phase de compression, les spires S1, S2, S3 se rapprochent axialement les unes des autres, ce qui a pour effet de comprimer (écraser) axialement les portions du bloc élastomère 20 qui sont comprises, ici prises en sandwich, chacune entre deux spires consécutives, et qui forment ainsi des sortes de coussins amortisseurs inter-spires, améliorant (augmentant) la raideur en compression, ainsi que la dissipation des éventuels sursauts ou oscillations.

A l'inverse, en phase de détente (d'expansion axiale du ressort 15, et plus globalement de l'organe de rappel 21), le ou les ponts élastomères formés par le bloc amortisseur 20 entre spires S1, S2, S3 consécutives permettent d'amortir le mouvement relatif entre deux spires consécutives du ressort, en procurant un effet de retenue d'une spire S2 par rapport à sa (ses) voisine(s) S1, S3, effet de retenue qui évite notamment l'apparition d'un mouvement d'écartement axial relatif rapide et de forte amplitude d'une spire par rapport à l'autre, et amortit ainsi les sursauts, notamment les sursauts du poussoir 13 contre la crémaillère 3, et/ou les sursauts de la crémaillère 3 contre le pignon 4, ou les oscillations axiales susceptibles de générer des chocs entre le poussoir 13 et le carter 8, 14.

Par ailleurs, le bloc amortisseur 20 peut avantageusement exercer une action d'amortissement du fait de sa torsion autour de l'axe générateur du ressort 15, ici l'axe de poussée (ZZ'), et ce aussi bien en phase de compression qu'en phase de détente.

En effet, dans les deux cas (compression ou détente), la déformation élastique axiale du ressort de rappel 15 s'accompagne d'une variation du diamètre d'enroulement des spires, c'est-à-dire d'une variation radiale du diamètre du ressort de rappel 15, mesuré perpendiculairement à son axe générateur 15, ledit diamètre tendant à augmenter en phase de compression, et à diminuer en phase d'expansion.

Ces variations de diamètre du ressort de rappel 15 sollicitent le bloc 20 élastomère en cisaillement, par un effet de torsion (vrillage) autour de l'axe générateur (ZZ') du ressort de rappel 15, du fait que les spires S1, S2, S3 adhèrent à l'élastomère qui les habille, et/ou par un effet de traction tangentielle liée à l'expansion radiale du bloc 20 qui est entraîné par l'expansion radiale du ressort de rappel 15 dont ledit bloc 20 est solidaire.

L'effet de déformation en torsion sera avantageusement induit par le fait que la surface des spires S1, S2, S3 qui est mouillée par l'élastomère (constitutif du bloc 20) tend à entraîner en déplacement tangentiel, par frottement, la couche dudit élastomère qui adhère à ou frotte contre, la surface desdites spires, par rapport aux couches dudit élastomère qui sont radialement plus éloignées de ladite surface des spires (se qui se traduit par une déformation élastique).

Le cas échéant, si l'on observe un glissement relatif des spires S1, S2, S3 par rapport à, et au contact de, l'élastomère qui les enrobe, le frottement accompagnant ce glissement aura avantageusement une certaine action dissipatrice d'énergie, de type freinage, qui contribuera à améliorer la capacité d'amortissement des déformations du ressort de rappel 15 par le bloc en élastomère 20, quel que soit du reste le sens de déformation axiale du ressort 15, et donc quel que soit le sens du mouvement relatif tangentiel des spires S1, S2, S3 par rapport au, et à l'intérieur du, bloc 20 en élastomère.

Selon une variante de réalisation non représentée, on pourrait envisager que le ressort de rappel 15, au lieu d'être formé par un ressort hélicoïdal d'un seul tenant, soit par exemple formé par un empilement (axial) d'une pluralité de rondelles élastiques, du genre rondelles Belleville, la pile de rondelles étant elle-même noyée dans le bloc 20 amortisseur, de matière à ce que les rondelles soient solidarisées les unes aux autres par (et au sein de) l'élastomère constitutif dudit bloc 20.

Le cas échéant, chaque rondelle, ou chaque paire de rondelles, pourra ainsi remplir le rôle d'une spire S1, S2, S3 au sens décrit dans ce qui précède.

Selon une variante possible de réalisation, le ressort de rappel 15 exerçant sa contrainte (correspondant ici à l'effort de poussée F13) sur le poussoir selon une direction (ZZ') dite « direction de poussée », qui correspond ici à l'axe générateur du ressort hélicoïdal 15, le bloc amortisseur 20 affleure au moins l'une des extrémités (axiales) du ressort de rappel 15, et de préférence les deux extrémités du ressort de rappel, selon ladite direction de poussée (ZZ'), tel que cela est illustré sur la figure 7.

Plus particulièrement, le bloc amortisseur 20 s'étendra ainsi (d'un seul tenant) entre d'une part un premier plan de base, normal à la direction de poussée (ZZ') et qui coïncide avec le premier plan d'appui P1 tangent à la première spire extrémale S_{P1} du ressort de rappel 15 (la spire axialement la plus proche du poussoir 13 et de la crémaillère 3, ici la spire supérieure sur les figures 4, 6 et 7), par lequel ledit ressort de rappel 15 vient en appui contre le poussoir 13 (ici au fond du logement d'accueil 22), et d'autre part un second plan de base, normal à la direction de poussée (ZZ') et qui coïncide avec un second plan d'appui P2, tangent à la seconde spire extrémale S_{P2} du ressort de rappel 15 (la spire axialement la plus éloignée du poussoir 13 et de la crémaillère 3, ici la spire inférieure), et par lequel ledit ressort 15 vient en appui contre la culasse 19.

On aura ainsi de préférence : L15 (longueur axiale du ressort de rappel 15) = L20 (longueur axiale du bloc amortisseur 20) = L21 (longueur totale de l'organe de rappel 21).

Avantageusement, cette disposition affleurante, avec identité de longueur (axiale) entre le ressort de rappel 15 et le bloc 20 qui l'enveloppe, permet une fabrication facile de l'organe de rappel 21, par moulage au moyen d'un outillage de forme particulièrement simple.

En outre, un tel agencement procurera un appui stable et ferme du ressort 15 contre le poussoir 13, respectivement contre la culasse 19.

Par ailleurs, à titre indicatif, la longueur (axiale) L15 à vide du ressort de rappel 15 pourra être sensiblement comprise entre 10 mm et 20 mm (lorsque ledit ressort 15 se trouve au repos, libre de contrainte de compression ou de traction).

Selon une autre variante possible de réalisation, le ressort de rappel 15 exerçant sa contrainte sur le poussoir 13 selon une direction dite « direction de poussée » (ZZ'), le bloc amortisseur 20 s'interrompt en retrait du ressort de rappel 15, selon ladite direction de poussée (ZZ'), de sorte à laisser saillante au moins une, voire les deux extrémités (axiales) dudit ressort de rappel 15, tel que cela est illustré sur la figure 8.

On aura alors L21 = L15 et L20 < L15.

Avantageusement, un tel agencement avec un bloc amortisseur 20 « rentrant », qui permet de dégager le premier plan d'appui P1 et/ou le second plan d'appui P2 par lequel la première spire extrémale S_{P1}, respectivement la seconde spire extrémale S_{P2}, du ressort vient au contact du poussoir 13, respectivement de la culasse 19, permettra d'éviter un fluage et une usure locale prématurée de l'élastomère au contact (axial) du poussoir 13 et/ou respectivement de la culasse 19.

De préférence, la longueur axiale de la portion nue du ressort de rappel 15, qui dépasse de l'extrémité correspondante la plus proche du bloc amortisseur 20, pourra représenter entre un peu plus de 0 % (0% correspondant à la variante de réalisation « affleurante » décrite ci-dessus) et 25 % de la longueur L15 dudit ressort, et par exemple être égale ou supérieure à 1%, ou à 5%, et inférieure ou égale à 20 % ou à 25 % de la longueur L15 dudit ressort 15.

Plus globalement, le taux axial de recouvrement du ressort 15 par le bloc 20, c'est-à-dire le rapport L20 / L15, sera de préférence égal ou supérieur à 50 %, voire à 75 % et inférieur (strictement) à 100 %, voire inférieur ou égal à 95 % ou à 90 % (100% correspondant en effet à la variante de réalisation « affleurante » décrite plus haut).

Préférentiellement, le débordement axial du ressort 15 en saillie du bloc amortisseur 20 sera sensiblement symétrique, c'est-à-dire sensiblement de même valeur des deux côtés du bloc amortisseur 20, vis-à-vis de la première spire extrémale S_{P1} et vis-à-vis de la seconde spire extrémale S_{P2}.

Selon une autre variante possible de réalisation, tel que cela est illustré sur la figure 9, le ressort de rappel 15 exerçant sa contrainte sur le poussoir 13 selon une direction dite « direction de poussée » (ZZ'), le bloc amortisseur 20 se prolonge en saillie du ressort de rappel 15, selon ladite direction de poussée (ZZ'), de préférence au-delà de chacune des premières et secondes extrémités axiales du ressort de rappel 15.

On aura alors L21 = L20 et L15 < L20

On notera que l'on pourra ainsi prévoir une surépaisseur axiale d'élastomère (vide de ressort 15) d'un côté du ressort 15 (en débordement du côté poussoir 13) et/ou de l'autre côté du ressort 15 (en débordement du côté culasse 19).

L'épaisseur de ladite surépaisseur axiale, c'est-à-dire la longueur axiale de la portion saillante du bloc 20 exclusivement en élastomère, mesurée entre l'extrémité axiale dudit bloc 20 et la spire extrémale S_{P1}, S_{P2} la plus proche, pourra par exemple être strictement supérieure à 0% (0% représentant la configuration affleurante décrite plus haut) et égale ou inférieure à 50 % de la longueur L15 du ressort de rappel 15.

Le cas échéant, l'interposition d'une surépaisseur d'élastomère entre le ressort de rappel 15 et les pièces sur lesquelles ledit ressort agit permettra à l'organe de rappel 21 de venir en appui sur le poussoir 13 et/ou respectivement sur la culasse 19 au moyen du bloc 20 en élastomère, en évitant ainsi un contact métallique direct du ressort de rappel 15 contre le poussoir 13 et/ou contre la culasse 19, ce qui améliorera l'insonorisation du système de poussoir 1 et limitera les chocs ainsi que l'usure de ces pièces au sein dudit système.

Selon une possibilité d'agencement, illustrée sur les figures 10 et 11, le bloc amortisseur 20 se présente sous la forme d'un tube 23, sensiblement coaxial à l'axe générateur (ZZ') du ressort de rappel 15, et dont la paroi latérale 24 délimite un évidement central 25 (débouchant, c'est-à-dire qui s'étend sur toute la longueur axiale du tube 23).

De préférence, la partie du ressort de rappel 15 qui est noyée dans le bloc amortisseur 20 est alors contenue (de préférence strictement contenue, sans déborder radialement) dans l'épaisseur radiale E24 de la paroi latérale 24 du tube 23.

De préférence, le diamètre de l'évidement central 25 sera sensiblement égal ou inférieur à 75 % du diamètre hors-tout D20 ( = 2*R20) du tube 23.

A titre indicatif, l'épaisseur radiale E24 de la paroi du tube 23 pourra être sensiblement comprise entre 1,5 mm et 15 mm.

Avantageusement, la mise en oeuvre d'un bloc amortisseur 20 tubulaire permet à l'élastomère d'accommoder facilement les déformations en compression, du fait que l'évidement central 25 offre un espace de débordement libre, vide de matière, qui peut accueillir et absorber un débordement (radial) de l'élastomère lorsque celui-ci tend à refluer sous la compression du ressort 15.

On peut ainsi améliorer la progressivité de l'action du bloc amortisseur 20, et donc celle de l'organe de rappel 21, en conférant audit bloc 20 un comportement particulièrement souple, tout en limitant l'excès de contraintes au sein dudit bloc 20, ce qui permet d'en réduire l'usure et d'en prolonger ainsi la durée de vie.

Selon une autre possibilité d'agencement, illustrée sur les figures 12 et 13, le bloc amortisseur 20 pourra présenter une structure pleine, massive, d'un seul tenant, sans évidement central, et de préférence de forme cylindrique de base circulaire, sensiblement centrée sur l'axe générateur (ZZ') du ressort de rappel 15.

Un tel agencement massif permettra notamment d'obtenir une raideur plus ferme de l'organe de rappel 21, notamment si ce dernier doit être particulièrement compact et/ou adapté à de petites courses de rattrapage de jeu.

En outre, la fabrication d'un tel organe de rappel 21 s'en trouvera particulièrement simplifiée.

Selon une possibilité préférentielle de réalisation, le bloc amortisseur 20 en élastomère est fixé au ressort de rappel 15 par adhérisation.

A cet effet, le ressort 15, et plus particulièrement la surface métallique des spires S1, S2, S3 destinées à être noyées dans l'élastomère, sera nettoyé(e), dégraissé(e), revêtu(e) d'une couche primaire puis d'un agent d'adhérisation destinés à faciliter l'accrochage de l'élastomère sur le ressort 15, avant d'être surmoulé(e) par l'élastomère constitutif du bloc 20.

L'élastomère pourra ainsi avantageusement adhérer fortement au ressort 15, auquel il sera véritablement collé par les liaisons chimiques qui se créent entre l'élastomère du bloc 20 et la surface du ressort 15, lors du moulage à chaud, et plus particulièrement lors d'une vulcanisation opérée conjointement audit moulage.

La meilleure adhérence ainsi obtenue permet d'accroître l'action élastique du bloc amortisseur 20 sur le ressort 15, notamment l'action liée au cisaillement lors de la compression du ressort 15 qui torsade (vrille) le bloc amortisseur 20.

Selon une autre possibilité de réalisation, plus simple et plus rapide à fabriquer, on pourra toutefois privilégier une fabrication sans adhérisation, afin d'améliorer le glissement (coulissement) tangentiel des spires S1, S2, S3 du ressort au sein de la gaine que forme autour d'elles le bloc 20 en élastomère.

Bien entendu, l'invention porte également en tant que telle sur un organe de rappel 21 formé d'un ressort de rappel 15 enrobé au moins partiellement voire en totalité d'un bloc en élastomère 20, selon l'une ou l'autre des variantes décrites dans ce qui précède, et ce quel que soit l'usage qui est fait dudit organe de rappel 21, et notamment quelle que soit la nature ou la conformation du mécanisme ou du dispositif auquel ledit organe de rappel 21 s'intègre.

L'invention porte en particulier sur un module de direction, de préférence de direction assistée, équipé d'un système de poussoir 1 de rattrapage de jeu (notamment de rattrapage de jeu entre pignon 4 et crémaillère 3) pourvu d'un organe de rappel 21, ainsi que sur un véhicule, de préférence à roues directrices et/ou motrices, équipé d'un tel module de direction.

En outre, l'invention n'est nullement limitée aux seules variantes de réalisation décrites dans ce qui précède, l'homme du métier étant notamment à même d'isoler ou de combiner librement entre elles l'une ou l'autre des caractéristiques susmentionnées, ou encore de leur substituer des équivalents.

## Revendications

1. Système de poussoir (1) pour mécanisme de direction (2) comprenant une crémaillère (3) de direction sur laquelle engrène au moins un pignon d'entraînement (4), ledit système de poussoir (1) comprenant un poussoir (13) qui est monté mobile au sein d'un carter de poussoir (14) et qui est placé sous la contrainte d'un ressort de rappel (15), de manière à ce que ledit poussoir (13) vienne exercer sur la crémaillère (3), sous l'action dudit ressort de rappel (15), un effort de poussée (F13) qui presse ladite crémaillère (3) contre le pignon d'entraînement (4), ledit système de poussoir (1) étant **caractérisé en ce que** le ressort de rappel (15) est au moins en partie noyé dans un bloc amortisseur (20) en matériau élastomère.

2. Système de poussoir selon la revendication 1 **caractérisé en ce que** le ressort de rappel (15) est réalisé dans un matériau métallique, tel que l'acier.

3. Système de poussoir selon la revendication 1 ou 2 **caractérisé en ce que** le ressort de rappel (15) est formé par un ressort hélicoïdal dont les spires (S1, S2, S3) s'étagent selon un axe générateur (ZZ'), et **en ce que** le bloc amortisseur (20) couvre au moins deux, et de préférence au moins trois, spires (S1, S2, S3) consécutives de sorte à relier axialement lesdites spires consécutives les unes aux autres.

4. Système de poussoir selon l'une des revendications précédentes **caractérisé en ce que**, le ressort de rappel (15) exerçant sa contrainte sur le poussoir (13) selon une direction dite « direction de poussée » (ZZ'), le bloc amortisseur (20) s'interrompt en retrait du ressort de rappel (15), selon ladite direction de poussée (ZZ'), de sorte à laisser saillante au moins une, voire les deux extrémités dudit ressort de rappel (15).

5. Système de poussoir selon l'une des revendications 1 à 3 **caractérisé en ce que**, le ressort de rappel (15) exerçant sa contrainte sur le poussoir (13) selon une direction dite « direction de poussée » (ZZ'), le bloc amortisseur (20) affleure au moins l'une des extrémités du ressort de rappel (15), et de préférence les deux extrémités du ressort de rappel, selon ladite direction de poussée (ZZ').

6. Système de poussoir selon l'une des revendications 1 à 3 **caractérisé en ce que**, le ressort de rappel (15) exerçant sa contrainte sur le poussoir selon une direction dite « direction de poussée » (ZZ'), le bloc amortisseur (20) se prolonge en saillie du ressort de rappel (15), selon ladite direction de poussée (ZZ').

7. Système de poussoir selon l'une des revendications précédentes **caractérisé en ce que** le bloc amortisseur (20) se présente sous la forme d'un tube (23), sensiblement coaxial à l'axe générateur (ZZ') du ressort de rappel (15), et dont la paroi latérale (24) délimite un évidement central (25), de préférence de telle sorte que la partie du ressort de rappel (15) qui est noyée dans le bloc amortisseur (20) est contenue dans l'épaisseur radiale (E24) de la paroi latérale (24) du tube (23).

8. Système de poussoir selon l'une des revendications 1 à 6 **caractérisé en ce que** le bloc amortisseur (20) en élastomère présente une structure pleine, d'un seul tenant, sans évidement central.

9. Système de poussoir selon l'une des revendications précédentes **caractérisé en ce que** le bloc amortisseur (20) en élastomère est fixé au ressort de rappel (15) par adhérisation.

10. Système de poussoir selon l'une des revendications précédentes **caractérisé en ce que** le ressort de rappel (15) et le bloc amortisseur (20) qui lui est associé forment un organe de rappel (21) qui est emmanché dans un logement d'accueil (22) creusé dans le poussoir (13).

11. Système de poussoir selon l'une des revendications précédentes **caractérisé en ce que** le carter de poussoir (14) forme une chemise qui s'étend depuis une ouverture d'accès (18), destinée à déboucher sur la crémaillère (3) pour permettre au poussoir (13) de venir au contact de la crémaillère (3), jusqu'à une culasse (19) qui obture ladite chemise à l'opposé de ladite ouverture d'accès (18), **en ce que** le poussoir (13) est monté et guidé en translation dans la chemise, et **en ce que** l'organe de rappel (21) que forment le ressort de rappel (15) et le bloc amortisseur (20) qui lui est associé est interposé entre la culasse (19) et la base du poussoir (13) opposée à la crémaillère (3).
